# EUROPÄISCHE PATENTANMELDUNG

(11) **EP 2 743 541 A2**
(43) Veröffentlichungstag der Anmeldung: **18.06.2014**
(21) Anmeldenummer: 13196669.9
(22) Anmeldetag: 11.12.2013
(51) Int. Cl.: F16F 15/139, F16F 15/14

(54) **Drehmomentübertragungseinrichtung**

(30) Priorität: 14.12.2012 DE 102012223254
(71) Anmelder: Schaeffler Technologies GmbH & Co. KG, 91074 Herzogenaurach (DE)
(72) Erfinder: Maienschein, Stephan, 76534 Baden-Baden (DE)

(57) **Zusammenfassung**

Die Erfindung betrifft eine Drehmomentübertragungseinrichtung umfassend eine als Anfahrkupplung ausgebildete, nasslaufende Kupplungseinrichtung zur Übertragung eines Drehmoments, mit einem eine Reibeinrichtung zum lösbaren Verbinden eines Kupplungseingangsteils mit einem Kupplungsausgangsteil aufnehmenden Kupplungsgehäuse, wobei eine Tilgereinrichtung zur Tilgung von Drehschwingungen, umfassend einen Tilgermassenträger und eine daran aufgenommene Tilgermasse im Drehmomentübertragungsweg vor der Reibeinrichtung angeordnet ist

## Beschreibung

Die Erfindung betrifft eine Drehmomentübertragungseinrichtung nach dem Oberbegriff von Anspruch 1.

Derartige Drehmomentübertragungseinrichtungen sind allgemein bekannt. So zeigt WO2010037661 eine Drehmomentübertragungseinrichtung umfassend eine nasslaufende Anfahrkupplung zur Übertragung eines Drehmoments mit einer Reibeinrichtung zum lösbaren Verbinden eines Kupplungseingangsteils mit einem Kupplungsausgangsteil und einen Torsionsschwingungsdämpfer mit einem Dämpfereingangsteil und einem gegenüber diesem entgegen der Wirkung von Energiespeicherelementen begrenzt verdrehbaren Dämpferausgangsteil, sowie eine Fliehkraftpendeleinrichtung mit einem Pendelmassenträger und beidseitig daran aufgenommenen Pendelmassen.

Dabei ist die Fliehkraftpendeleinrichtung im Drehmomentübertragungsweg nach der Reibeinrichtung angeordnet.

Die Aufgabe liegt darin, eine verbesserte Reduzierung der Torsionsschwingungen zu bewirken. Weiterhin kann die Aufgabe auch darin bestehen, den Bauraumbedarf innerhalb des Kupplungsgehäuses zu verringern.

Die Aufgabe wird durch alle Merkmale des Gegenstands gemäß Anspruch 1 gelöst.

Dementsprechend wird eine Drehmomentübertragungseinrichtung umfassend eine als Anfahrkupplung ausgebildete, nasslaufende Kupplungseinrichtung zur Übertragung eines Drehmoments, mit einem eine Reibeinrichtung zum lösbaren Verbinden eines Kupplungseingangsteils mit einem Kupplungsausgangsteil aufnehmenden Kupplungsgehäuse vorgeschlagen, wobei eine Tilgereinrichtung zur Tilgung von Drehschwingungen, umfassend einen Tilgermassenträger und eine daran aufgenommene Tilgermasse im Drehmomentübertragungsweg vor der Reibeinrichtung angeordnet ist.

Die Tilgereinrichtung kann als Fliehkraftpendeleinrichtung ausgebildet sein. Dabei ist der Tilgermassenträger als Pendelmassenträger und die Tilgermasse als an dem Pendelmassenträger aufgenommene Pendelmasse ausgeführt. Die Pendelmasse kann gegenüber dem Pendelmassenträger begrenzt verschwenkbar sein, um eine Auslenkung der Pendelmasse gegenüber dem Pendelmassenträger entlang einer vorbestimmten Pendellaufbahn zu ermöglichen.

Auch können wenigstens zwei Pendelmassen vorgesehen sein, die axial beidseitig an dem Pendelmassenträger verschwenkbar aufgenommen sind und untereinander zur Bildung eines Pendelmassenpaars verbunden sind, insbesondere fest verbunden sind.

Weitere vorteilhafte Ausführungsformen sind in den Unteransprüchen angegeben.

Die Kupplungseinrichtung kann auch Bestandteil einer als Doppelkupplung ausgebildeten Drehmomentübertragungseinrichtung sein, mit wenigstens zwei jeweils mit einer Getriebeeingangswelle verbindbaren Kupplungseinrichtungen, bei der die Drehmomentübertragungseinrichtung vorstehende Merkmale aufweist.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.
Die Erfindung wird im Folgenden unter Bezugnahme auf die Abbildungen im Speziellen beschrieben. Es zeigen im Einzelnen:
- Figur 1:: Blockschaltbild einer Drehmomentübertragungseinrichtung in einer speziellen Ausführungsform der Erfindung.
- Figur 2:: Querschnitt eines Ausschnitts einer Drehmomentübertragungseinrichtung in einer speziellen Ausführungsform der Erfindung.
- Figur 3:: Blockschaltbild einer Drehmomentübertragungseinrichtung in einer weiteren speziellen Ausführungsform der Erfindung.
- Figur 4:: Querschnitt eines Ausschnitts einer Drehmomentübertragungseinrichtung in einer weiteren speziellen Ausführungsform der Erfindung.

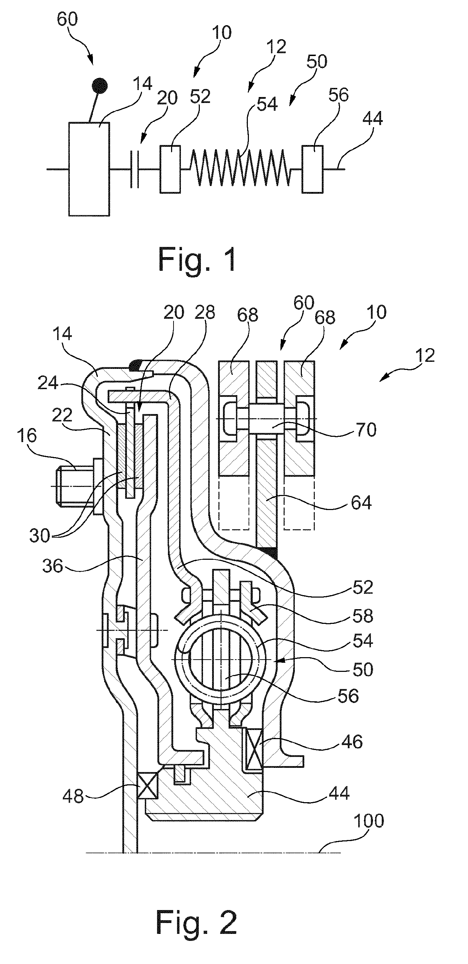

Figur 1 zeigt ein Blockschaltbild einer Drehmomentübertragungseinrichtung 10 in einer speziellen Ausführungsform der Erfindung. Die Drehmomentübertragungseinrichtung 10 umfasst eine als Anfahrkupplung ausgebildete nasslaufende Kupplungseinrichtung 12 zur Übertragung eines Drehmoments zwischen einem Antriebselement, beispielsweise einer Brennkraftmaschine und einem Abtriebselement, beispielsweise einem Getriebe. Die Kupplungseinrichtung 12 weist ein Kupplungsgehäuse 14 auf, worin ein Fluid aufgenommen werden kann. In dem Kupplungsgehäuse 14 ist eine Reibeinrichtung 20 eingebracht zur wahlweisen Bewirkung oder Unterbrechung der Drehmomentübertragung zwischen Antriebselement und Abtriebselement.

Der Reibeinrichtung 20 ist in Bezug auf den Drehmomentübertragungsweg ein Torsionsschwingungsdämpfer 50 nachgeschaltet, der ein Dämpfereingangsteil 52 und ein gegenüber diesem entgegen der Wirkung von Energiespeicherelementen 54 begrenzt verdrehbares Dämpferausgangsteil 56 aufweist. Das Dämpferausgangsteil 56 ist mit einem Abtriebsbauteil 44 verbindbar.

Im Drehmomentübertragungsweg ist vor der Reibeinrichtung 12 eine Tilgereinrichtung 60 angeordnet. Insbesondere ist die Tilgereinrichtung 60 an dem Kupplungsgehäuse 14 angeordnet.

In Figur 2 ist ein Querschnitt eines Ausschnitts einer Drehmomentübertragungseinrichtung 10 in einer speziellen Ausführungsform der Erfindung dargestellt. Bestandteil der Drehmomentübertragungseinrichtung 10 bildet eine um eine Drehachse 100 drehbare nasslaufende und als Anfahrkupplung ausgebildete Kupplungseinrichtung 12, die von einem zweiteilig ausgebildeten Kupplungsgehäuse 14 umschlossen wird, worin ein Fluid aufgenommen ist. Das Kupplungsgehäuse 14 ist mit einem Mitnehmerelement 16 mit einem Antriebselement verbindbar. Das Mitnehmerelement 16 ist an dem Kupplungsgehäuse 14 befestigt, insbesondere verschweißt oder vernietet.

In dem Kupplungsgehäuse 14 ist eine Reibeinrichtung 20 angeordnet, die ein Kupplungseingangsteil 22 mit einem Kupplungsausgangsteil 28 über die Wirkung von Reibbereichen 30 lösbar verbinden kann. Dazu ist das Kupplungseingangsteil 22 als Teil des Kupplungsgehäuses 14 ausgeführt. Wirksam zwischen dem Kupplungseingangsteil 22 und dem Kupplungsausgangsteil 28 ist ein Zwischenelement 24 eingebracht, das gehäuseseitig über einen ersten Reibbereich 30 und gegenüberliegend über einen zweiten Reibbereich 30 mit einem Kolbenelement 36 verbindbar ist.

Das Kolbenelement 36 ist axial verschiebbar auf einer Abtriebsnabe 44 aufgenommen und drehfest mit dem Kupplungsgehäuse 14 verbunden, insbesondere vernietet. Das Zwischenelement 24 ist mit dem Kupplungsausgangsteil 28 drehfest über eine Verzahnung verbunden. Das Kupplungsausgangsteil 28 ist einteilig mit einem Dämpfereingangsteil 52 eines der Reibeinrichtung 20 nachgeschalteten Torsionsschwingungsdämpfers 50 ausgebildet und auf der Abtriebsnabe 44 zentriert aufgenommen. Das Dämpfereingangsteil 52 wird durch ein weiteres Bauteil 58 ergänzt, das mit dem Dämpfereingangsteil 52 fest verbunden ist.

Das Dämpfereingangsteil 52 dient der Beaufschlagung von Energiespeicherelementen 54 zur Übertragung eines Drehmoments an ein gegenüber dem Dämpfereingangsteil 52 begrenzt verdrehbares Dämpferausgangsteil 56, wozu das Dämpferausgangsteil 56 mit den Energiespeicherelementen 54 in Eingriff steht.

Das Dämpferausgangsteil 56 ist einteilig mit der Abtriebsnabe 44 ausgebildet, die radial innen eine Verzahnung zur drehfesten Verbindung mit einer Abtriebswelle aufweist. Die Abtriebsnabe ist über ein Lagerelement 46 und ein weiteres Lagerelement 48 an dem Kupplungsgehäuse 14 abstützbar, insbesondere axial beidseitig abstützbar.

An dem Kupplungsgehäuse 14 und in Bezug auf den Drehmomentübertragungsweg vor der Reibeinrichtung 20 ist außerhalb des Kupplungsgehäuses 14 eine Tilgereinrichtung 60 drehfest angebracht. Insbesondere ist die Tilgereinrichtung 60 als Fliehkraftpendeleinrichtung ausgebildet, umfassend einen Pendelmassenträger 64, der mit dem Kupplungsgehäuse 14 fest verbunden ist, insbesondere verschweißt ist. Der Pendelmassenträger 64 erstreckt sich von der Anbindungsstelle nach radial außen und nimmt in einem radial äußeren Bereich axial beidseitig Pendelmassen 68 auf, die über Abstandsbolzen 70 miteinander verbunden sind. Die Abstandsbolzen 70 greifen hierzu durch entsprechende Ausschnitte in dem Pendelmassenträger 64 durch. Die Pendelmassen 68 sind über in dem Pendelmassenträger 64 aufgenommene Abrollelemente gegenüber dem Pendelmassenträger 64 entlang einer Pendellaufbahn begrenzt verlagerbar ist. Dadurch kann eine drehzahlabhängige Tilgung von Drehschwingungen bewirkt werden.

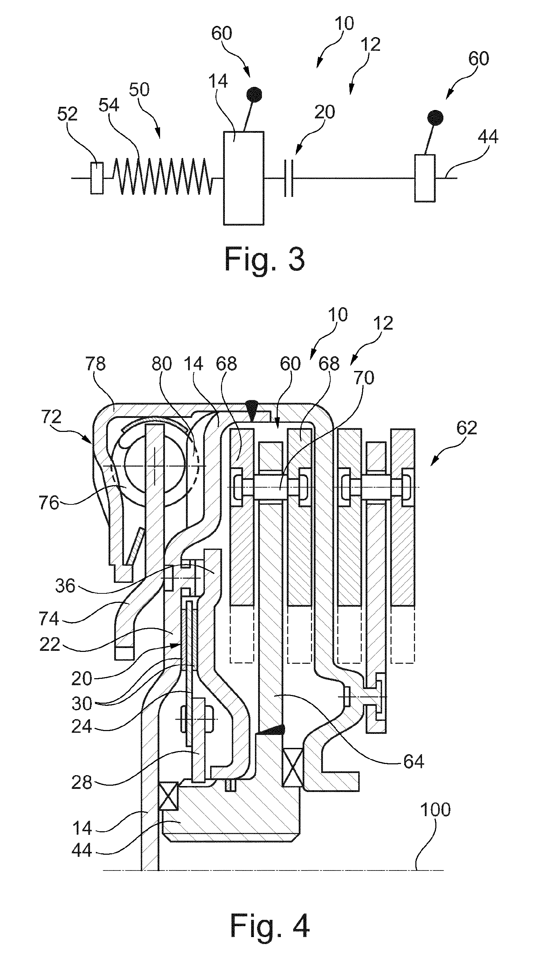

Figur 3 zeigt ein Blockschaltbild einer Drehmomentübertragungseinrichtung 10 in einer weiteren speziellen Ausführungsform der Erfindung. Die Drehmomentübertragungseinrichtung 10 umfasst eine als Anfahrkupplung ausgebildete nasslaufende Kupplungseinrichtung 12 zur Übertragung eines Drehmoments zwischen einem Antriebselement, beispielsweise einer Brennkraftmaschine und einem Abtriebselement, beispielsweise einem Getriebe. Die Kupplungseinrichtung 12 weist ein Kupplungsgehäuse 14 auf, worin ein Fluid aufgenommen werden kann. In dem Kupplungsgehäuse 14 ist eine Reibeinrichtung 20 eingebracht zur wahlweisen Bewirkung oder Unterbrechung der Drehmomentübertragung zwischen Antriebselement und Abtriebselement.

Der Reibeinrichtung 20 ist in Bezug auf den Drehmomentübertragungsweg ein Torsionsschwingungsdämpfer 50 vorgeschaltet, der ein Dämpfereingangsteil 52 und ein gegenüber diesem entgegen der Wirkung von Energiespeicherelementen 54 begrenzt verdrehbares Dämpferausgangsteil 56 aufweist. Das Dämpferausgangsteil 56 ist mit dem Kupplungsgehäuse 14 verbindbar, insbesondere drehfest verbunden, vorzugsweise einteilig mit diesem ausgeführt. Der Torsionsschwingungsdämpfer 50 ist außerhalb des Kupplungsgehäuses 14 angeordnet.

Im Drehmomentübertragungsweg ist vor der Reibeinrichtung 12 eine Tilgereinrichtung 60 angeordnet. Insbesondere ist die Tilgereinrichtung 60 an dem Kupplungsgehäuse 14 angeordnet. Eine weitere Tilgereinrichtung 60 ist an einem Abtriebsbauteil, insbesondere der Abtriebsnabe 44 angeordnet. Dabei kann diese Tilgereinrichtung 60 innerhalb oder außerhalb des Kupplungsgehäuses 14 angebracht sein.

In Figur 4 ist ein Querschnitt eines Ausschnitts einer Drehmomentübertragungseinrichtung 10 in einer weiteren speziellen Ausführungsform der Erfindung dargestellt. Bestandteil der Drehmomentübertragungseinrichtung 10 bildet eine um eine Drehachse 100 drehbare nasslaufende und als Anfahrkupplung ausgebildete Kupplungseinrichtung 12, die von einem zweiteilig ausgebildeten Kupplungsgehäuse 14 umschlossen wird, worin ein Fluid aufgenommen ist.

Das Kupplungsgehäuse 14 ist über einen Torsionsschwingungsdämpfer 72 mit einem Antriebselement verbindbar. Der Torsionsschwingungsdämpfer 72 weist ein Dämpfereingangsteil 74 auf, das mit einem Antriebselement beispielsweise über eine Verzahnung verbindbar ist und in Eingriff mit Energiespeicherelementen 76 steht. Weiterhin ist ein Dämpferausgangsteil 78 wirksam mit den Energiespeicherelementen 76 verbindbar zur Übertragung eines Drehmoments zwischen Dämpfereingangsteil 74 und dem Dämpferausgangsteil 78, wozu das Dämpferausgangsteil 78 gegenüber dem Dämpfereingangsteil 74 begrenzt verdrehbar ist.

Das Dämpferausgangsteil 78 ist insbesondere einteilig mit dem Kupplungsgehäuse 14 ausgebildet und umgreift die Energiespeicherelemente 76 radial außen. Zur Drehmomentübertragung zwischen Energiespeicherelementen 76 und Dämpferausgangsteil 78 sind Vorsprünge 80, insbesondere Laschen aus dem Kupplungsgehäuse 14 ausgebildet, die mit den Energiespeicherelementen 76 wirksam in Eingriff stehen.

Das Kupplungsgehäuse 14 nimmt im Inneren eine Reibeinrichtung 20 auf, die ein Kupplungseingangsteil 22 mit einem Kupplungsausgangsteil 28 über die Wirkung von Reibbereichen 30 lösbar verbinden kann. Dazu ist das Kupplungseingangsteil 22 als Teil des Kupplungsgehäuses 14 ausgeführt. Wirksam zwischen dem Kupplungseingangsteil 22 und dem Kupplungsausgangsteil 28 ist ein Zwischenelement 24 eingebracht, das gehäuseseitig über einen ersten Reibbereich 30 und gegenüberliegend über einen zweiten Reibbereich 30 mit einem Kolbenelement 36 verbindbar ist.

Das Kolbenelement 36 ist axial verschiebbar auf einer Abtriebsnabe 44 aufgenommen und drehfest mit dem Kupplungsgehäuse 14 verbunden, insbesondere vernietet. Das Zwischenelement 26 ist mit der Abtriebsnabe 44 drehfest über eine Verzahnung verbunden.

An der Abtriebsnabe 44 ist eine Tilgereinrichtung 60 drehfest angebracht, wobei die Tilgereinrichtung 60 innerhalb des Kupplungsgehäuses 14 angeordnet ist. Insbesondere ist die Tilgereinrichtung 60 als Fliehkraftpendeleinrichtung ausgebildet, umfassend einen Pendelmassenträger 64, der mit der Abtriebsnabe 44 fest verbunden ist, insbesondere verschweißt ist. Der Pendelmassenträger 64 erstreckt sich von der Anbindungsstelle nach radial außen und nimmt in einem radial äußeren Bereich axial beidseitig Pendelmassen 68 auf, die über Abstandsbolzen 70 miteinander verbunden sind. Die Abstandsbolzen 70 greifen hierzu durch entsprechende Ausschnitte in dem Pendelmassenträger 64 durch. Die Pendelmassen 70 sind über in dem Pendelmassenträger 64 aufgenommene Abrollelemente gegenüber dem Pendelmassenträger 64 entlang einer Pendellaufbahn begrenzt verlagerbar ist. Dadurch kann eine drehzahlabhängige Tilgung von Drehschwingungen bewirkt werden.

Die Tilgereinrichtung 60 ist der Reibeinrichtung in Bezug auf den Drehmomentübertragungsweg nachgeschaltet. Eine weitere, zweite Tilgereinrichtung 62 ist der Reibeinrichtung 20 bezüglich dem Drehmomentübertragungsweg vorgeschaltet und außerhalb und an dem Kupplungsgehäuse 14 fest angebunden, insbesondere vernietet. Die Tilgereinrichtung 62 ist als Fliehkraftpendeleinrichtung ausgebildet. Vorzugsweise ist die Tilgereinrichtung 62 abtriebsseitig in Bezug auf das Kupplungsgehäuse angeordnet.

### Bezugszeichenliste

- 10: Drehmomentübertragungseinrichtung
- 12: Kupplungseinrichtung
- 14: Kupplungsgehäuse
- 16: Mitnehmerelement
- 20: Reibeinrichtung
- 22: Kupplungseingangsteil
- 24: Zwischenelement
- 28: Kupplungsausgangsteil
- 30: Reibbereiche
- 36: Kolbenelement
- 44: Antriebsbauteil
- 46: Lagerelemente
- 50, 72: Torsionsschwingungsdämpfer
- 52, 74: Dämpfereingangsteil
- 54, 76: Energiespeicherelemente
- 56, 78: Dämpferausgangsteil
- 58: Bauteil
- 60, 62: Tilgereinrichtung
- 64: Pendelmassenträger
- 68: Pendelmassen
- 70: Abstandsbolzen
- 100: Drehachse

## Patentansprüche

1. Drehmomentübertragungseinrichtung (10) umfassend eine als Anfahrkupplung ausgebildete, insbesondere nasslaufende Kupplungseinrichtung zur Übertragung eines Drehmoments, mit einem eine Reibeinrichtung zum lösbaren Verbinden eines Kupplungseingangsteils mit einem Kupplungsausgangsteil aufnehmenden Kupplungsgehäuse, **dadurch gekennzeichnet, dass** eine Tilgereinrichtung zur Tilgung von Drehschwingungen, umfassend einen Tilgermassenträger und eine daran aufgenommene Tilgermasse im Drehmomentübertragungsweg vor der Reibeinrichtung angeordnet ist.

2. Drehmomentübertragungseinrichtung (10) nach Anspruch 1, wobei die Tilgereinrichtung an dem Kupplungsgehäuse angeordnet ist.

3. Drehmomentübertragungseinrichtung (10) nach einem der Ansprüche 1 oder 2, wobei die Tilgereinrichtung außerhalb des Kupplungsgehäuses angeordnet ist.

4. Drehmomentübertragungseinrichtung (10) nach einem der Ansprüche 1 bis 3, wobei die Tilgereinrichtung mit dem Kupplungsgehäuse mittelbar oder unmittelbar verbunden ist.

5. Drehmomentübertragungseinrichtung (10) nach einem der Ansprüche 1 bis 4, wobei die Tilgereinrichtung mit dem Kupplungsgehäuse drehfest verbunden ist.

6. Drehmomentübertragungseinrichtung (10) nach einem der Ansprüche 1 bis 5, wobei das Kupplungsgehäuse eine Anbindungsstelle zur Einleitung eines Drehmoments in die Kupplungseinrichtung aufweist und die Tilgereinrichtung an der Anbindungsstelle angebracht ist.

7. Drehmomentübertragungseinrichtung (10) nach Anspruch 6, wobei die Tilgereinrichtung umfangsseitig neben der Anbindungsstelle angeordnet ist.

8. Drehmomentübertragungseinrichtung (10) nach einem der Ansprüche 1 bis 7, wobei die Tilgereinrichtung an der der Reibeinrichtung zugewandten und/oder abgewandten Seite des Kupplungsgehäuses angeordnet ist.

9. Drehmomentübertragungseinrichtung (10) nach einem der Ansprüche 1 bis 8, wobei wenigstens zwei Tilgereinrichtungen vorgesehen sind.

10. Drehmomentübertragungseinrichtung (10) nach Anspruch 9, wobei die eine Tilgereinrichtung außerhalb und die andere innerhalb des Gehäuses angeordnet ist.
